(19) Europäisches Patentamt
European Patent Office
Office européen des brevets

(11) **EP 1 439 526 B1**

(12) **EUROPEAN PATENT SPECIFICATION**

(45) Date of publication and mention
of the grant of the patent:
**02.11.2011 Bulletin 2011/44**

(51) Int Cl.:
*G10L 21/02* (2006.01)    *H04R 3/00* (2006.01)

(21) Application number: **04250219.5**

(22) Date of filing: **16.01.2004**

(54) **Adaptive beamforming method and apparatus using feedback structure**

Verfahren und Vorrichtung zur adaptiven Strahlbildung mit Rückkopplungsstruktur

Méthode et dispositif de formation adaptative de faisceaux avec structure à rétroaction

(84) Designated Contracting States:
**DE FR GB IT**

(30) Priority: **17.01.2003 KR 2003003258**

(43) Date of publication of application:
**21.07.2004 Bulletin 2004/30**

(73) Proprietor: **SAMSUNG ELECTRONICS CO., LTD.**
**Suwon-si,**
**Gyeonggi-do (KR)**

(72) Inventors:
• **Choi, Chang-kyu**
**Seoul (KR)**
• **Kim, Jay-woo**
**Yongin-si, Gyeonggi-do (KR)**
• **Kong, Dong-geon**
**Haeundae-gu, Busan-si (KR)**

(74) Representative: **Greene, Simon Kenneth**
**Elkington and Fife LLP**
**Prospect House**
**8 Pembroke Road**
**Sevenoaks**
**Kent TN13 1XR (GB)**

(56) References cited:
• **HOSHUYAMA O ET AL: "A ROBUST ADAPTIVE BEAMFORMER FOR MICROPHONE ARRAYS WITH A BLOCKING MATRIX USING CONSTRAINED ADAPTIVE FILTERS" IEEE TRANSACTIONS ON SIGNAL PROCESSING, IEEE, INC. NEW YORK, US, vol. 47, no. 10, October 1999 (1999-10), pages 2677-2684, XP000947154 ISSN: 1053-587X**
• **G. MIRCHANDANI, JR.R.L. ZINSER, AND J.B. EVANS: "A new adaptive noise cancellation scheme in the presence of crosstalk" IEEE TRANS. CIRCUITS AND SYSTEMS- II ANALOG AND DIGITAL SIGNAL PROCESSING, vol. 39, no. 10, October 1992 (1992-10), pages 681-694, XP002305549**

**Description**

The present invention relates to an adaptive beamformer, and more particularly, to a method and apparatus for adaptive beamforming using a feedback structure.

Mobile robots have applications in health-related fields, security, home networking, entertainment, and so forth, and are the focus of increasing interest. Interaction between people and mobile robots is necessary for operating the mobile robots. Like people, a mobile robot with a vision system has to recognize people and surroundings, find the position of a person talking in the vicinity of the mobile robot, and understand what the person is saying.

A voice input system of the mobile robot is indispensable for interaction between man and robot and is an important factor affecting autonomous mobility. Important factors affecting the voice input system of a mobile robot in an indoor environment are noise, reverberation, and distance. There are a variety of noise sources and reverberation due to walls or other objects in the indoor environment. Low frequency components of a voice are more attenuated than high frequency components with respect to distance. Accordingly, for proper interaction between a person and an autonomous mobile robot within a house, a voice input system has to enable the robot to recognize the person's voice at a distance of several meters.

Such a voice input system generally uses a microphone array composed of at least two or more microphones to improve voice detection and recognition. In order to remove noise components contained in a speech signal input via the microphone array, a single channel speech enhancement method, an adaptive acoustic noise canceling method, a blind signal separation method, and a generalized sidelobe canceling method are employed.

The single channel speech enhancement method, disclosed in "Spectral Enhancement Based on Global Soft Decision" (IEEE Signal Processing Letters, Vol. 7, No. 5, pp. 108-110, 2000) by Nam-Soo Kim and Joon-Hyuk Chang, uses one microphone and ensures high performance only when statistical characteristics of noise do not vary with time, like stationary background noise. The adaptive acoustic noise canceling method, disclosed in "Adaptive Noise Canceling: Principles and Applications" (Proceedings of IEEE, Vol. 63, No. 12, pp. 1692-1716, 1975) by B. Widrow et al., uses two microphones. Here, one of the two microphones is a reference microphone for receiving only noise. Thus, if only noise cannot be received or noise received by the reference microphone contains other noise components, the performance of the adaptive acoustic noise canceling method sharply drops. Also, the blind signal separation method is difficult to use in the actual environment and to implement real-time systems.

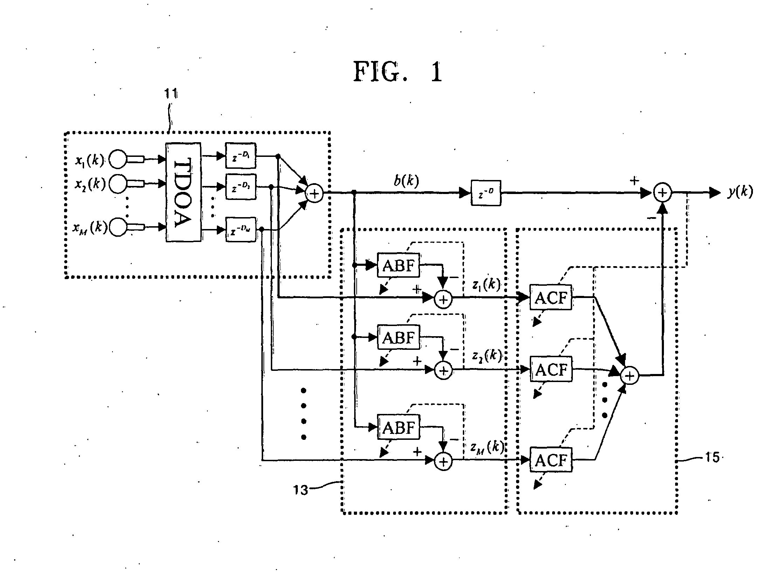

FIG. 1 is a block diagram of a conventional adaptive beamformer using the generalized sidelobe canceling method. The conventional adaptive beamformer includes a fixed beamformer (FBF) 11, an adaptive blocking matrix (ABM) 13, and an adaptive multi-input canceller (AMC) 15. The generalized sidelobe canceling method is described in more detail in "A Robust Adaptive Beamformer For Microphone Arrays With A Blocking Matrix Using Constrained Adaptive Filters" (IEEE Trans. Signal Processing, Vol. 47, No. 10, pp. 2677-2684, 1999) by O. Hoshuyama et al.

Referring to FIG. 1, the FBF 11 uses a delay-and-sum beamformer. In other words, the FBF 11 obtains the correlation of signals input via microphones and calculates time delays among signals input via the microphones. Thereafter, the FBF 11 compensates for signals input via the microphones by the calculated time delays, and then adds the signals in order to output a signal b(k) having an improved signal-to-noise ratio (SNR). The ABM 13 subtracts a signal b(k) output from the FBF 11 through adaptive blocking filters (ABFs) from the signals whose time delays are compensated for in order to maximize noise components. The AMC 15 filters signals $z_m(k)$, where m is an integer between 1 and M, output from the ABM 13 through adaptive canceling filters (ACFs), and then adds the filtered signals, thereby generating noise components via M microphones. Thereafter, a signal output from the AMC 15 is subtracted from the signal b(k), which is delayed for a predetermined period of time D, to obtain a signal y(k) in which noise components are cancelled.

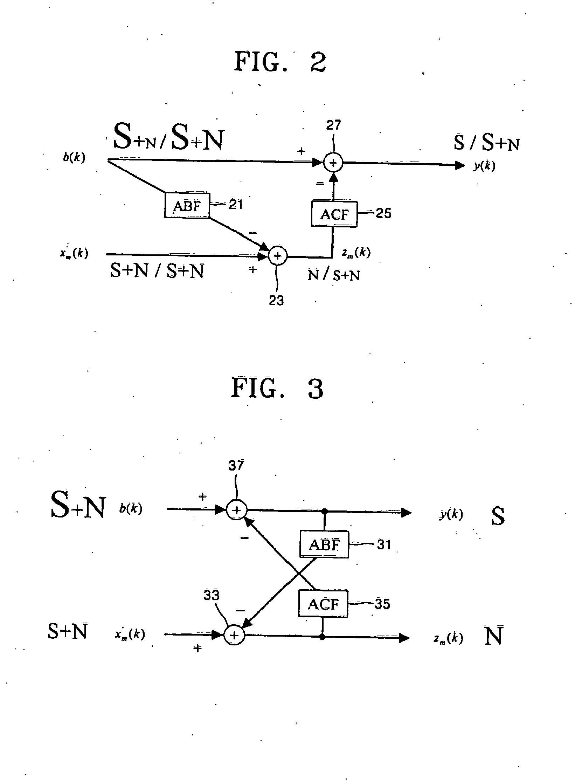

The operations of the ABM 13 and the AMC 15 shown in FIG. 1 will be described in more detail with reference to FIG. 2. The operations of the ABM 13 and the AMC 15 are the same as in the adaptive acoustic noise canceling method.

Referring to FIG. 2, the size of symbols S+N, S, and N denotes the relative magnitude of speech and noise signals in specific locations, and left symbols and right symbols separated by a slash '/' denote 'to-be' and 'as-is' states, respectively.

An ABF 21 adaptively filters the signal b(k) output from the FBF 11 according to the signal output from a first subtractor 23 so that a characteristic of speech components of the filtered signal output from the ABF 21 is the same as that of speech components of a microphone signal $x'_m(k)$ that is delayed for a predetermined period of time. The first subtractor 23 subtracts the signal output from the ABF 21 from the microphone signal $x'_m(k)$, where m is an integer between 1 and M, to obtain and output a signal $z_m(k)$ which is generated by canceling speech components **S** from the microphone signal $x'_m(k)$.

An ACF 25 adaptively filters the signal $z_m(k)$ output from the first subtractor 23 according to the signal output from a second subtractor 27 so that a characteristic of noise components of the filtered signal output from the ACF 25 is the same as that of noise components of the signal b(k). The second subtractor 27 subtracts the signal output from the ACF 25 from the signal b(k) and output a signal y(k) which is generated by canceling noise components **N** from the signal b(k).

However, the above-described generalized sidelobe canceling method has the following drawbacks. The delay-and-sum beamformer of the FBF 11 has to generate the signal b(k) with a very high SNR so that only pure noise signals are input to the AMC 15. However, since the delay-and-sum beamformer outputs a signal whose SNR is not very high, the overall performance drops. As a result, since the ABM 13 outputs a noise signal containing a speech signal, the AMC 15, using the output of the ABM 13, regards speech components contained in the signal output from the ABM 13 as noise and cancels the noise. Therefore, the adaptive beamformer finally outputs a speech signal containing noise components. Also, since filters used in the generalized sidelobe canceling method have a feedforward connection structure, finite impulse response (FIR) filters are employed. When such FIR filters are used in the feedforward connection structure, 1000 or more filter taps are needed in a room reverberation environment. In addition, in a case where the ABF 21 and the ACF 25 are not properly trained, the performance of the adaptive beamformer may deteriorate. Thus, speech presence intervals and speech absence intervals are necessary for training the ABF 21 and the ACF 25. However, these training intervals are generally unavailable in practice. Moreover, since adaptation of the ABM 13 and the AMC 15 has to be alternately performed, a voice activity detector (VAD) is needed. In other words, for adaptation of the ABF 21, a speech component is a desired signal and a noise component is an undesired signal. On the contrary, for adaptation of the ACF 25, a noise component is a desired signal and a speech component is an undesired signal.

In a paper entitled "A New Adaptive Noise Cancellation Scheme in the Presence of Crosstalk" (IEEE Transactions on Circuits and Systems-II Analog and Digital Signal Processing, Vol. 39, No. 10, October 1992), G. Mirchandani et al present an adaptive filter structute for improving the cancellation of noise in the presence of crosstalk in a system using two transducers.

According to an aspect of the present invention, there is provided an adaptive beamforming method according to claim 1.

According to another aspect of the invention, there is provided an adaptive beamforming method according to claim 2.

The present invention provides a method of adaptive beamforming using a feedback structure capable of almost completely canceling noise components contained in a wideband speech signal input from a microphone array composed of at least two microphones.

According to another aspect of the invention, there is provided an adaptive beamforming apparatus according to claim 5.

According to yet another aspect of the present invention, there is also provided an adaptive beamforming apparatus according to claim 6.

The present invention also provides an apparatus most suitable for realizing the method.

The above and other features and advantages of the present invention will become more apparent by describing in detail exemplary embodiments thereof with reference to the attached drawings in which:

FIG. 1 is a block diagram of a conventional adaptive beamformer;
FIG. 2 is a circuit diagram for explaining a feed-forward structure used in the conventional adaptive beamformer shown in FIG. 1;
FIG. 3 is a circuit diagram for explaining a feedback structure according to an embodiment of the present invention;
FIG. 4 is a block diagram of an adaptive beamformer according to an embodiment of the present invention;
FIG. 5 is a block diagram of an adaptive beamformer according to another embodiment of the present invention; and
FIG. 6 illustrates an experimental environment used for comparing an adaptive beamformer according to the present invention and the conventional adaptive beamformer shown in FIG. 1.

Hereinafter, embodiments of the present invention will be described in detail with reference to the attached drawings. Meanwhile, a "speech" used hereinafter is a representation implicitly including any target signal necessary for using the present invention.

FIG. 3 is a circuit diagram for explaining a feedback structure according to an embodiment of the present invention. The feedback structure includes an ABF 31, a first subtractor 33, an ACF 35, and a second subtractor 37.

Referring to FIG. 3, the ABF 31 adaptively filters a signal y(k) output from the second subtractor 37 according to a signal output from the first subtractor 33 so that a characteristic of speech components of the filtered signal output from the ABF 31 is the same as that of speech components of a microphone signal $x'_m(k)$, where m is an integer between 1 and M, that is delayed for a predetermined period of time. A first subtractor 33 subtracts a signal output from the ABF 31 from a signal $x_m(k-D_m)$, i.e. $x'_m(k)$ obtained by delaying a signal $x_m(k)$ input to an $m^{th}$ microphone among M microphones, where M is an integer greater than or equal to 2, for a predetermined period of time $D_m$. As a result, the first subtractor 33 outputs only a pure noise signal **N** contained in the signal $x_m(k)$.

The ACF 35 adaptively filters a signal $z_m(k)$ output from the first subtractor 33 according to a signal output from the second subtractor 37 so that a characteristic of noise components of the filtered signal output from the ACF 35 is the same as that of noise components of the signal b(k) output from FBF 11 shown in FIG. 1. The second subtractor 37 subtracts the signal output from the ACF 35 from the signal b(k). Thus, the second subtractor 37 outputs only a pure speech signal S derived from the signal b(k) in which noise components are cancelled.

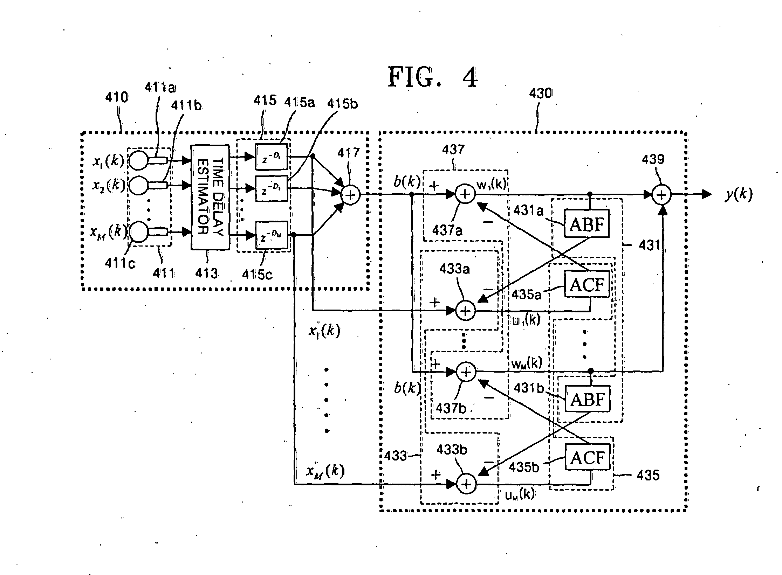

FIG. 4 is a block diagram of an adaptive beamformer according to an embodiment of the present invention. The adaptive beamformer includes a FBF 410 and a multi-channel signal separator 430. The FBF 410 includes a microphone array 411 having M microphones 411a, 411b, and 411c, a time delay estimator 413, a delayer 415 having M delay devices 415a, 415b and 415c, and a first adder 417. The multi-channel signal separator 430 includes a first filter 431 having M ABFs 431a and 431b, a first subtractor 433 having M subtractors 433a and 433b, a second filter 435 having M ACFs 435a and 435b, a second subtractor 437 having M subtractors 437a and 437b, and a second adder 439.

Referring to FIG. 4, in the FBF 410, the microphone array 411 receives speech signals $x_1(k)$, $x_2(k)$, and $x_M(k)$ via the M microphones 411a, 411b and 411c. The time delay estimator 413 obtains the correlation of the speech signals $x_1(k)$, $x_2(k)$ and $x_M(k)$ and calculates time delays $D_1$, $D_2$, and $D_M$ of the speech signals $x_1(k)$, $x_2(k)$ and $x_M(k)$. The M delay devices 415a, 415b and 415c of the delayer 415 respectively delay the speech signals $x_1(k)$, $x_2(k)$ and $x_M(k)$ by the time delays $D_1$, $D_2$ and $D_M$ calculated by the time delay estimator 413, and output speech signals $x_1'(k)$, $x_2'(k)$ and $x_M'(k)$. Here, the time delay estimator 413 may calculate time delays of speech signals using various methods besides the calculation of the correlation.

The first adder 417 adds the speech signals $x_1'(k)$, $x_2'(k)$ and $x_M'(k)$ and outputs a signal b(k). The signal b(k) output from the first adder 417 can be represented as in Equation 1.

$$b(k) = \sum_{m=1}^{M} x_m{'}(k), \quad m = 1,...,M \qquad \qquad ...(1)$$

In the multi-channel signal separator 430, the M ABFs 431a and 431b adaptively filter signals output from the M subtractors 437a and 437b of the second subtractor 437 according to signals output from the M subtractors 433a and 433b of the first subtractor 433, so that a characteristic of speech components of the filtered signals output from the M ABFs 431a and 431b is the same as that of speech components of a microphone signal $x'_m(k)$, that is delayed for a predetermined period of time.

The M subtractors 433a and 433b of the first subtractor 433 respectively subtract the signals output from the M ABFs 431a and 431b from the speech signals $x_1'(k)$ and $x_M'(k)$, and respectively output signals $u_1(k)$ and $u_M(k)$ to the M ACFs 435a and 435b. When a coefficient vector of the $m^{th}$ ABF of the first filter 431 is $\mathbf{h}^T_m(k)$ and the number of taps is L, the signal $u_m(k)$ output from the subtractors 433a and 433b of the first subtractor 433 can be represented as in Equation 2.

$$u_m(k) = x'_m(k) - \mathbf{h}^T_m(k)\mathbf{w}_m(k) \qquad \qquad ...(2)$$

wherein, $\mathbf{h}^T_m(k)$ and $\mathbf{w}_m(k)$ can be represented as in Equations 3 and 4, respectively.

$$\mathbf{h}_m(k) = [h_{m,1}(k), h_{m,2}(k),..., h_{m,L}(k)]^T \qquad \qquad ...(3)$$

wherein, $h_{m,1}(k)$ is an $\ell^{th}$ coefficient of $\mathbf{h}_m(k)$.

$$w_m(k) = [w_m(k-1), w_m(k-2),..., w_m(k-L)]^T \qquad \qquad ...(4)$$

wherein, $\mathbf{w}_m(k)$ denotes a vector collecting L past values of $w_m(k)$, L denotes the number of filter taps of the M ABFs 431a and 431b.

The M ACFs 435a and 435b of the second filter 435 adaptively filter the signals $u_1(k)$ and $u_M(k)$. output from the M subtractors 433a and 433b of the first subtractor 433 according to signals output from the M subtractors 437a and 437b of the second subtractor 437, so that a characteristic of noise components of the filtered signals output from the M ACFs 435a and 435b is the same as that of noise components of the signal b(k) output from the FBF 410.

The M subtractors 437a and 437b of the second subtractor 437 respectively subtract the signals output from the M ACFs 435a and 435b of the second filter 435 from the signal b(k) output from the FBF 410, and output $w_1$(k) and $w_M$(k) to the second adder 439. When a coefficient vector of the $m^{th}$ ACF of the second filter 435 is $\mathbf{g}_m$(k) and the number of taps is N, the signal $w_m$(k) output from the M subtractors 437a and 437b of the second subtractor 437 can be represented as in Equation 5.

$$w_m(k) = b(k) - g^T{}_m(k)u_m(k) \qquad \ldots(5)$$

wherein, $\mathbf{g}^t{}_m$(k) and $\mathbf{u}_m$(k) can be represented as in Equations 6 and 7, respectively.

$$\mathbf{g}_m(k) = [g_{m,1}(k), g_{m,2}(k), \ldots, g_{m,N}(k)]^T \qquad \ldots(6)$$

wherein, $g_{m,n}$(k) denotes an $n^{th}$ coefficient of $\mathbf{g}_m$(k).

$$\mathbf{u}_m(k) = [u_m(k-1), u_m(k-2), \ldots, u_m(k-N)]^T \qquad \ldots(7)$$

wherein, $\mathbf{u}_m$(k) denotes a vector collecting N past values of $u_m$(k) and N denotes the number of filter taps of the M ACFs 435a and 435b.

The second adder 439 adds $w_1$(k) and $w_M$(k) output from the M subtractors 437a and 437b of the second subtractor 437 and finally outputs a signal y(k) in which noise components are cancelled. The signal y(k) output from the second adder 439 can be represented as in Equation 8.

$$y(k) = \sum_{m=1}^{M} w_m(k), \qquad m = 1,\ldots M \qquad \ldots(8)$$

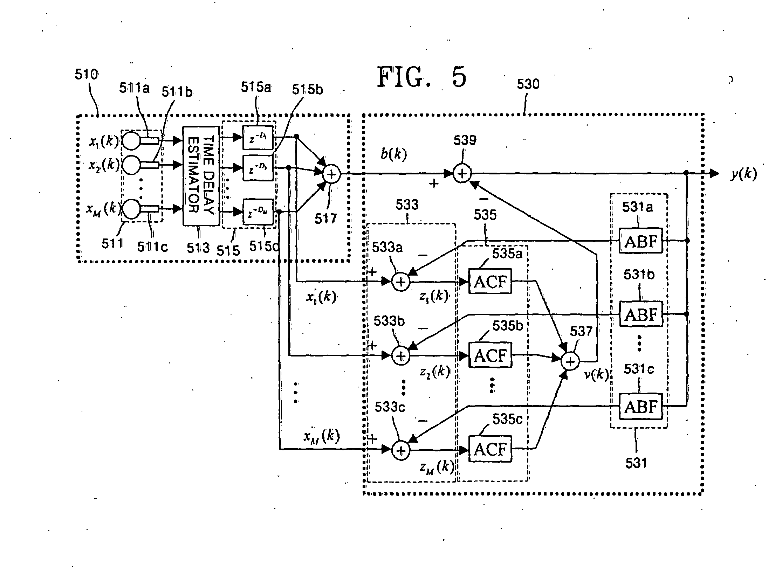

FIG. 5 is a block diagram of an adaptive beamformer according to another embodiment of the present invention. Referring to FIG. 5, the adaptive beamformer includes a FBF 510 and a multi-channel signal separator 530. The FBF 510 includes a microphone array 511 having M microphones 511 a, 511 b and 511 c, a time delay estimator 513, a delayer 515 having M delay devices 515a, 515b and 515c, and a first adder 517. The multi-channel signal separator 530 includes a first filter 531 having M ABFs 531 a, 531 b, and 531 c, and a first subtractor 533 having M substractors 533a, 533b and 533c, a second filter 535 having M ACFs 535a, 535b and 535c, a second adder 537, and a second subtractor 539. Here, the structure and operation of the FBF 510 are the same as those of the FBF 410 shown in FIG. 4, and thus will not be described herein; only the multi-channel separator 530 will be described.

Referring to FIG. 5, in the multi-channel signal separator 530, the M ABFs 531 a, 531 b and 531 c of the first filter 531 adaptively filter a signal y(k) output from the second subtractor 539 according to signals output from the M subtractors 533a, 533b and 533c of the first subtractor 533, so that a characteristic of speech components of the filtered signals output from the M ABFs 531 a, 531 b and 531 c is the same as that of speech components of a microphone signal $x'_m$(k), that is delayed for a predetermined period of time.

The M subtractors 533a, 533b and 533c of the first subtractor 533 respectively subtract the signals output from ABFs 531 a, 531 b and 531 c from microphone signals $x_1'$(k), $x_2'$(k) and $x_M'$(k) delayed for a predetermined period of time and output signals $z_1$(k), $z_2$(k) and $z_M$(k) to the M ACFs 535a, 535b and 535c of the second filter 535. When a coefficient vector of the $m^{th}$ ABF of the first filter 531 is $\mathbf{h}_m$(k) and the number of taps is L, the signal $z_m$(k) output from the M subtractors 533a, 533b and 533c of the first subtractor 533 can be represented as in Equation 9.

$$\mathbf{z}_m(k) = x'_m(k) - \mathbf{h}^T{}_m(k)\mathbf{y}(k), \quad m = 1,\ldots,M \qquad \ldots(9)$$

wherein, $\mathbf{h}^T_m$(k) and $\mathbf{y}$(k) can be represented as in Equations 10 and 11, respectively.

$$\mathbf{h}_m(k) = [h_{m,1}(k), h_{m,2}(k),...,h_{m,L}(k)]^T \qquad ...(10)$$

wherein, $h_{m,n}$ (k) denotes an $n^{th}$ coefficient of $\mathbf{h}_m$(k).

$$\mathbf{y}(k) = [y(k-1), y(k-2),...,y(k-L)]^T \qquad ...(11)$$

wherein, y(k) denotes a vector collecting L past values of y(k) and L denotes the number of filter taps of the M ABFs 531 a, 531 b and 531 c.

The M ACFs 535a, 535b and 535c of the second filter 535 adaptively filter the signals $z_1$(k), $z_2$(k) and $z_M$(k) output from the M subtractors 533a, 533b and 533c of the first subtractor 533 according to a signal output from the second subtractor 539, so that a characteristic of noise components of a signal v(k) output from the second adder 537 is the same as that of noise components of the signal b(k) output from the FBF 510.

The second adder 537 adds the signals output from the M ACFs 535a, 535b and 535c. When a coefficient of the $m^{th}$ ACF of the second filter 535 is $\mathbf{g}_m$(k) and the number of taps is N a signal v(k) output from the second adder 537 can be represented as in Equation 12.

$$v(k) = \sum_{m=1}^{M} \mathbf{g}^T_m(k)\mathbf{z}_m(k), \quad m = 1,...,M \qquad ...(12)$$

wherein, $\mathbf{g}^T_m$(k) and $z_m$(k) can be represented as in Equations 13 and 14, respectively.

$$\mathbf{g}_m(k) = [g_{m,1}(k), g_{m,2}(k),...,g_{m,N}(k)]^T \qquad ...(13)$$

wherein, $g_{m,n}$(k) denotes an $n^{th}$ coefficient of $\mathbf{g}_m$(k).

$$\mathbf{z}_m(k) = [z_m(k-1), z_m(k-2),...,z_m(k-N)]^T \qquad ...(14)$$

wherein, $\mathbf{z}_m$(k) denotes a vector collecting N past values of $z_m$(k) and N denotes the number of filter taps of the M ACFs 535a, 535b and 535c.

The second subtractor 539 subtracts the signal v(k) output from the second adder 537 from the signal b(k) output from the FBF 510 and outputs the signal y(k). The signal y(k) output from the second subtractor 539 can be represented as in Equation 15.

$$y(k) = b(k) - v(k) \qquad ...(15)$$

In the above-described embodiments, the M ABFs 431 a and 431 b of the first filter 431, the M ABFs 531 a, 531 b and 531 c of the first filter 531, M ACFs 435a and 435b of the second filter 435, and the M ACFs 535a, 535b and 535c of the second filter 535 may be FIR filters. In view of inputs and outputs, each of the filters is an FIR filter. However, the multi-channel signal separators 430 and 530 may be regarded as infinite impulse response (IIR) filters in view of inputs, i.e., the signal b(k) output from the FBFs 410 and 510 and the microphone signals $x_1$'(k), $x_2$'(k) and $x_M$'(k) delayed for a predetermined period of time, and outputs, i.e., the signal y(k) output from the second adder 439 shown in FIG. 4 and the second subtractor 539 shown in FIG. 5. This is because the M ABFs 431a and 431b and the M ABFs 531 a, 531 b and 531 c of the first filters 431 and 531 and the M ACFs 435a and 435b and the M ACFs 535a, 535b and 535c of the second filters 435 and 535 have a feedback connection structure.

Coefficients of the FIR filters are updated by the information maximization algorithm proposed by Anthony J. Bell. The information maximization algorithm is a statistical learning rule well known in the field of independent component analysis, by which non-Gaussian data structures of latent sources are found from sensor array observations on the assumption that the latent sources are statistically independent. Since the information maximization algorithm does not need a VAD, coefficients of ABFs and ACFs can be automatically adapted without knowledge of the desired and undesired signal levels.

According to the information maximization algorithm, coefficients of the M ABFs 431 a and 431 b and the M ACFs 435a and 435b are updated as in Equations 16 and 17.

$$h_{m,l}(k+1) = h_{m,l}(k) + \alpha SGN(u_m(k))w_m(k-l) \qquad ...(16)$$

$$g_{m,n}(k+1) = g_{m,n}(k) + \beta SGN(w_m(k))u_m(k-n) \qquad ...(17)$$

wherein, $\alpha$ and $\beta$ denote step sizes for learning rules and **SGN(•)** is a sign function which is +1 if an input is greater than zero and -1 if the input is less than zero.

According to the information maximization algorithm, coefficients of the M ABFs 531 a, 531 b and 531 c and the M ACFs 535a, 535b and 535c are updated as in Equations 18 and 19.

$$h_{m,l}(k+1) = h_{m,l}(k) + \alpha SGN(z_m(k))y(k-l) \qquad ...(18)$$

$$g_{m,n}(k+1) = g_{m,n}(k) + \beta SGN(y(k))z_m(k-n) \qquad ...(19)$$

wherein, $\alpha$ and $\beta$ denote step sizes for learning rules and **SGN(•)** is a sign function which is +1 if an input is greater than zero and -1 if the input is less than zero. The sign function **SGN(•)** could be replaced by any kind of saturation function, such as a sigmoid function and a **tanh(•)** function.

In addition, coefficients of the M ABFs 431 a and 431 b, the M ABFs 531 a, 531 b and 531 c, M ACFs 435a and 435b, and the M ACFs 535a, 535b and 535c can be updated using any kind of statistical learning algorithms such as a least square algorithm and its variant, a normalized least square algorithm.

As described above, when the M ABFs 431 a and 431 b and the M ACFs 435a and 435b, and the M ABFs 531 a, 531 b and 531c and the M ACFs 535a, 535b and 535c are FIR filters and connected in a feedback structure, and the number of microphones of each of the microphone arrays 411 and 511 is 8, the number of filter taps of the adaptive beamformer shown in FIGS. 4 or 5 is 8×(128+128)=2048, which is much fewer than the number 8×(512+128)=5120 of filter taps of the conventional adaptive beamformer shown in FIG. 1.

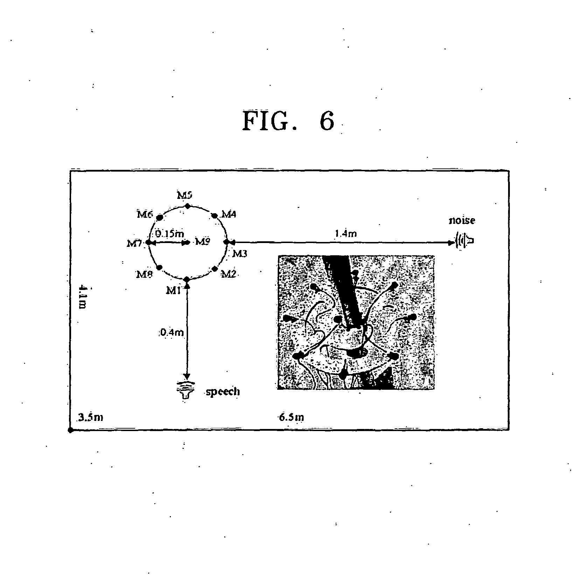

FIG. 6 illustrates an experimental environment used for comparing an adaptive beamformer according to the present invention and the conventional adaptive beamformer shown in FIG. 1. A circular microphone array having a diameter of 30 cm was located in the center of a room having a length of 6.5m, a width of 4.1 m, and a height of 3.5m. Eight microphones were installed on the circular microphone array at the same distance. The heights of the microphone array, a target speaker, and a noise speaker were all 0.79m from the floor. Target sources were speech waves of 40 words pronounced by four male speakers, and noise sources were a fan and music.

The results of an objective evaluation of the performance of the two adaptive beamformers in the above-described experimental environment, e.g., a comparison of SNRs, are shown in Table 1.

[Table 1]

|  | Raw Signal | Prior Art (GSC) | Present Invention |
|---|---|---|---|
| FAN | 9.0 | 19.5 | 27.5 |
| MUSIC | 6.9 | 15.5 | 24.9 |
| $\Delta_{FAN}$ | X | 10.5 | 18.5 |

(continued)

|  | Raw Signal | Prior Art (GSC) | Present Invention |
|---|---|---|---|
| $\Delta_{MUSIC}$ | X | 8.6 | 18.0 |

As can be seen in Table 1, the SNR in a beamforming method according to the present invention is roughly double the SNR in a beamforming method according to the prior art.

For a subjective evaluation in the experimental environment, e.g., an AB preference test, after ten people had listened to outputs of a beamformer according to the prior art and a beamformer according to the present invention, they were asked to choose one of the following sentences for evaluation, which are "A is much better than B", "A is better than B", "A and B are the same", "A is worse than B", and "A is much worse than B". A test program randomly determined which one of the beamformers according to the prior art and the present invention would output signal A. Also, two points were given for "much better", one point for "better", and no points for "the same" and then the results were summed. The subjective evaluation compared 40 words for fan noise and another 40 words for music noise, and the results of the comparison are shown in Table 2.

[Table 2]

|  | Prior art (GSC) | Present Invention |
|---|---|---|
| FAN | 78 | 517 |
| MUSIC | 140 | 284 |

As can be seen in Table 2, the outputs of the beamformer according to the present invention are preferred to the outputs of the beamformer according the prior art.

As described above, according to the present invention, by connecting ABFs and ACFs in a feedback structure, noise components contained in a wideband speech signal input via a microphone array composed of at least two microphones can be nearly completely cancelled. Also, while the ABFs and the ACFs have been realized as FIR filters and connected in a feedback structure, the ABFs and the ACFs may be regarded as IIR filters, which reduces the number of filter taps. In addition, since an information maximization algorithm can be used to learn coefficients of the ABFs and the ACFs, the number of parameters necessary for learning can be reduced and a VAD for detecting whether speech signals exist is not necessary.

Moreover, a method and apparatus for adaptively beamforming according to the present invention are not greatly affected by the size, arrangement, or structure of a microphone array. Also, a method and apparatus for adaptively beamforming according to the present invention are robust against look directional errors than the conventional art, regardless of the type of noise.

The present invention can be realized as a computer-readable code on a computer-readable recording medium. Such a computer-readable medium may be any kind of recording medium in which computer-readable data is stored. Examples of such computer-readable media include ROMs, RAMS, CD-ROMs, magnetic tapes, floppy discs, optical data storing devices, and carrier waves (e.g., transmission via the Internet), and so forth. Also, the computer-readable code can be stored on the computer-readable media distributed in computers connected via a network. Furthermore, functional programs, codes, and code segments for realizing the present invention can be easily analogized by programmers skilled in the art.

Moreover, a method and apparatus for adaptively beamforming according to the present invention can be applied to autonomous mobile robots to which microphone arrays are attached, and to vocal communication with electronic devices in an environment where a user is distant from a microphone. Examples of such electronic devices include personal digital assistants (PDA), WebPads, and portable phone terminals in automobiles, having a small number of microphones. With the present invention, the performance of a voice recognizer can be considerably improved.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1.   An adaptive beamforming method comprising:

(a) compensating for time delays ($D_1$,$D_2$,$D_M$) of M noise-containing speech signals ($x_1(k)$, $x_2(k)$, $x_m(k)$) input via a microphone array (411) having M microphones, where M is an integer greater than or equal to 2, and then generating a sum signal ($b(k)$) of the M compensated noise-containing speech signals ($x_1'(k)$, $x_2'(k)$, $x_m'(k)$); and
(b) extracting noise components from the M compensated noise-containing speech signals ($x_1'(k)$, $x_2'(k)$, $x_m'$ ($k$)) using M adaptive blocking filters (431a,431b) that are connected to M adaptive canceling filters (435a,435b) in a feedback structure and extracting pure speech components from the added signal using the M adaptive canceling filters that are connected to the M adaptive blocking filters in the feedback structure,
and **characterized in that** step (b) comprises:

    (b1) filtering a noise-removed sum signal through the M adaptive blocking filters (431a,431b);
    (b2) subtracting signals output from the M adaptive blocking filters from the M compensated noise-containing speech signals ($x_1'(k)$, $x_2'(k)$, $x_m'(k)$);
    (b3) filtering M subtraction results ($u_1(k)$, $u_2(k)$, $u_m(k)$) calculated in step (b2) through the M adaptive canceling filters (435a,435b);
    (b4) subtracting signals output from the M adaptive canceling filters (435a,435b) from the sum signal ($b(k)$) and inputting M subtraction results ($w_1(k)$, $w_2(k)$, $w_m(k)$) to the M adaptive blocking filters (431a,431b) as the noise-removed sum signal; and
    (b5) adding the M subtraction ($w_1(k)$, $w_2(k)$, $w_m(k)$) results calculated in step (b4).

2. An adaptive beamforming method comprising:

    (a) compensating for time delays ($D_1$,$D_2$,$D_M$) of M noise-containing speech signals ($x_1(k)$, $x_2(k)$, $x_m(k)$) input via a microphone array (411) having M microphones, where M is an integer greater than or equal to 2, and then generating a sum signal ($b(k)$) of the M compensated noise-containing speech signals ($x_1'(k)$, $x_2'(k)$, $x_m'(k)$); and
    (b) extracting noise components from the M compensated noise-containing speech signals ($x_1'(k)$, $x_2'(k)$, $x_m'$ ($k$)) using M adaptive blocking filters (431a,431b) that are connected to M adaptive canceling filters (435a,435b) in a feedback structure and extracting pure speech components from the added signal using the M adaptive canceling filters that are connected to the M adaptive blocking filters in the feedback structure,
and **characterized in that** step (b) comprises:

    (b1) filtering the noise-removed sum signal through the M adaptive blocking filters (531a,531b,531c);
    (b2) subtracting signals output from the M adaptive blocking filters from the M compensated noise-containing speech signals ($x_1'(k)$, $x_2'(k)$, $x_m'(k)$);
    (b3) filtering M subtraction results ($z_1(k)$, $z_2(k)$, $z_m(k)$) calculated in step (b2) through the M adaptive canceling filters (535a,535b,535c);
    (b4) adding signals output from the M adaptive canceling filters; and
    (b5) subtracting signal ($v(k)$) output in step (b4) from the sum signal ($b(k)$) and inputting M subtraction results to the M adaptive blocking filters as the noise-removed sum signal.

3. The method of claim 1 or 2, wherein the M adaptive blocking filters (431a,431b) and the M adaptive canceling filters (435a,435b) are finite impulse response filters.

4. The method of claim 3, wherein coefficients of the M adaptive blocking filters (431a,431b) and the M adaptive canceling filters (435a,435b) are updated by an information maximization algorithm.

5. An adaptive beamforming apparatus comprising:

    a fixed beamformer that compensates for time delays ($D_1$,$D_2$,$D_M$) of M noise-containing speech signals ($x_1(k)$, $x_2(k)$, $x_m(k)$) input via a microphone array (411) having M microphones, where M is an integer greater than or equal to 2, and then generates a sum signal ($b(k)$) of the M compensated noise-containing speech signals ($x_1'(k)$, $x_2'(k)$, $x_m'(k)$); and
    a multi-channel signal separator (430) that extracts noise components from the M compensated noise-containing speech signals ($x_1'(k)$, $x_2'(k)$, $x_m'(k)$) using M adaptive blocking filters (431a,431b) that are connected to M adaptive canceling filters (435a,435b) in a feedback structure and extracts pure speech components from the added signal using the M adaptive canceling filters that are connected to the M adaptive blocking filters in the feedback structure,
and **characterized in that**
the multi-channel signal separator comprises:

a first filter (431) that filters the noise-removed sum signal through the M adaptive blocking filters (431a,431b);
a first subtractor (433) that subtracts signals output from the M adaptive blocking filters from the M compensated noise-containing speech signals ($x_1$'(k), $x_2$'(k), $x_m$'(k)) using M subtractors (433a,433b);
a second filter (435) that filters M subtraction results ($u_1$(k), $u_2$(k), $u_m$(k)) of the first subtractor (433) through the M adaptive canceling filters (435a,435b);
a second subtractor (437) that subtracts signals output from the M adaptive canceling filters (435a,435b) from the sum signal (b(k)) using M subtractors (437a,437b), and inputs M subtraction results ($w_1$(k), $w_2$(k), $w_m$(k)) to the M adaptive blocking filters (431a,431b) as the noise-removed sum signal; and
a second adder (439) that adds signals ($w_1$(k), $w_2$(k), $w_m$(k)) output from the M subtractors of the second subtractor (437).

6. An adaptive beamforming apparatus comprising:

a fixed beamformer that compensates for time delays ($D_1$,$D_2$,$D_M$) of M noise-containing speech signals ($x_1$(k), $x_2$(k), $x_m$(k)) input via a microphone array (411) having M microphones, where M is an integer greater than or equal to 2, and then generates a sum signal (b(k)) of the M compensated noise-containing speech signals ($x_1$'(k), $x_2$'(k), $x_m$'(k)); and
a multi-channel signal separator (430) that extracts noise components from the M compensated noise-containing speech signals ($x_1$'(k), $x_2$'(k), $x_m$'(k)) using M adaptive blocking filters (431a,431b) that are connected to M adaptive canceling filters (435a,435b) in a feedback structure and extracts pure speech components from the added signal using the M adaptive canceling filters that are connected to the M adaptive blocking filters in the feedback structure,
and **characterized in that** the multi-channel signal separator comprises:

a first filter (531) that filters the noise-removed sum signal through the M adaptive blocking filters (531a, 531b,531c);
a first subtractor (533) that subtracts signals output from the M adaptive blocking filters from the M compensated noise-containing speech signals ($x_1$'(k), $x_2$'(k), $x_m$'(k)) using M subtractors (533a,533b,533c);
a second filter (535) that filters signals ($z_1$(k), $z_2$(k), $z_m$(k)) output from the M subtractors (533a,533b,533c) of the first subtractor (53) through the M adaptive canceling filters (535a,535b,535c);
a second adder (537) that adds signals output from M adaptive canceling filters of the second filter; and
a second subtractor (539) that subtracts signal (v(k)) output from the second adder (537) from the signals (b(k)) output from the fixed beamformer (510) and inputs M subtraction results to the M adaptive blocking filters (531a,531b,531c) as the noise-removed sum signal.

7. The apparatus of claim 5 or 6, wherein the fixed beamformer comprises:

a time delay estimator (413) that calculates time delays ($D_1$,$D_2$,$D_M$) signals ($x_1$(k), $x_2$(k), $x_m$(k))) of the M noise-containing speech signals ($x_1$(k), $x_2$(k), $x_m$(k)) input from the microphone array (411);
a delayer (415) that delays the M noise-containing speech signals by the time delays calculated by the delayer; and
a first adder (417) that adds the M noise-containing speech signals delayed by the delayer (415)

8. The apparatus of claim 5, 6 or 7, wherein the M adaptive blocking filters (531a,531b,531c) and the M adaptive canceling filters (535a,535b,535c) are finite impulse response filters.

9. The apparatus of claim 5, 6, 7 or 8, wherein coefficients of the M adaptive blocking filters (531a,531b,531c) and the M adaptive canceling filters (535a,535b,535c) are updated by an information maximization algorithm.

**Patentansprüche**

1. Verfahren zum adaptiven Beamformen, umfassend:

(a) Kompensieren von Zeitverzögerungen ($D_1$, $D_2$, $D_M$) von M rausch-haltigen Sprachsignalen ($x_1$(k), $x_2$(k), $x_m$,(k)), die über eine Mikrofongruppe (411) mit M Mikrofonen eingegeben werden, wobei M eine ganze Zahl größer oder gleich 2 ist, und dann Erzeugen eines Summensignals (b(k)) der M kompensierten rausch-haltigen Sprachsignale ($x_1$'(k), $x_2$'(k), $x_m$'(k)) und

(b) Extrahieren von Rauschkomponenten aus den M kompensierten rausch-haltigen Sprachsignalen ($x_1$'(k), $x_2$'(k), $x_m$'(k)) unter Verwendung von M adaptiven Sperrfiltern (431a, 431b), die mit M adaptiven Löschfiltern (435a, 435b) in einer Rückkoppelstruktur verbunden sind, und Extrahieren von reinen Sprachkomponenten aus dem addierten Signal unter Verwendung der M adaptiven Löschfilter, die mit den M adaptiven Sperrfiltern in der Rückkoppelstruktur verbunden sind, und

**dadurch gekennzeichnet, dass** Schritt (b) umfasst:

(b1) Filtern eines rausch-eliminierten Summensignals durch die M adaptiven Sperrfiltern (431a, 431b),
(b2) Subtrahieren von Signalen, die aus den M adaptiven Sperrfiltern ausgegeben werden, von den M kompensierten rausch-haltigen Sprachsignalen ($x_1$'(k), $x_2$'(k), $x_m$'(k)),
(b3) Filtern von M Subtraktionsergebnissen ($u_1$(k), $u_2$(k), $u_m$(k)), die in Schritt (b2) errechnet worden sind, durch die M adaptiven Löschfilter (435a, 435b),
(b4) Subtrahieren von Signalen, die aus den M adaptiven Löschfiltern (435a, 435b) ausgegeben werden, vom Summensignal (b(k)) und Eingeben von M Subtraktionsergebnissen ($w_1$(k), $w_2$(k), $w_m$(k)) in die M adaptiven Sperrfilter (431a, 431b) als rausch-eliminiertes Summensignal
und
(b5) Addieren der M Subtraktionsergebnisse ($w_1$(k), $w_2$(k), $w_m$,(k)), die in Schritt (b4) errechnet worden sind.

2. Verfahren zum adaptiven Beamformen, umfassend:

(a) Kompensieren von Zeitverzögerungen ($D_1$, $D_2$, $D_M$) von M rauschhaitigen Sprachsignalen ($x_1$(k), $x_2$(k), $x_m$(k)), die über eine Mikrofongruppe (411) mit M Mikrofonen eingegeben werden, wobei M eine ganze Zahl größer oder gleich 2 ist, und dann Erzeugen eines Summensignals (b(k)) der M kompensierten rausch-haltigen Sprach-signale ($x_1$'(k), $x_2$'(k), $x_m$'(k)) und
(b) Extrahieren von Rauschkomponenten aus den M kompensierten rausch-haltigen Sprachsignalen ($x_1$'(k), $x_2$'(k), $x_m$'(k)) unter Verwendung von M adaptiven SperrFilfiern (431a, 431b), die mit M adaptiven Löschfiltern (435a, 435b) in einer Rückkoppelstruktur verbunden sind, und Extrahieren von reinen Sprachkomponenten aus dem addierten Signal unter Verwendung der M adaptiven Löschfilter, die mit den M adaptiven Sperrfiltern in der Rückkoppelstruktur verbunden sind, und

**dadurch gekennzeichnet, dass** Schritt (b) umfasst:

(b1) Filtern des rausch-eliminierten Summensignals durch die M adaptiven Sperrfilter (531a, 531b, 531c),
(b2) Subtrahieren von Signalen, die aus den M adaptiven Sperrfiltern ausgegeben werden, von den M kompensierten rausch-haltigen Sprachsignalen ($x_1$'(k), $x_2$'(k), $x_m$'(k)),
(b3) Filtern von M Subtraktionsergebnissen ($z_1$(k), $z_2$(k), $z_m$(k)), die in Schritt (b2) errechnet worden sind, durch die M adaptiven Löschfilter (535a, 535b, 535c),
(b4) Addieren von Signalen, die aus den M adaptiven Löschfiltern ausgegeben werden, und
(b5) Subtrahieren eines Signals (v(k)), das in Schritt (b4) ausgegeben wird, vom Summensignal (b(k)) und Eingeben von M Subtraktionsergebnissen in die M adaptiven Sperrfilter als rausch-eüminiertes Summensignal.

3. Verfahren nach Anspruch 1 oder 2, wobei die M adaptiven Sperrfilter (431a, 431b) und die M adaptiven Löschfilter (435a, 435b) Finite-Impulse-Response(FIR)-Filter sind.

4. Verfahren nach Anspruch 3, wobei Koeffizienten der M adaptiven Sperrfilter (431a, 431b) und der M adaptiven Löschfilter (435a, 435b) durch einen Informationsmaximierungsalgorithmus aktualisiert werden.

5. Vorrichtung zum adaptiven Beamformen, umfassend:

einen festgelegten Beamformer, der Zeitverzögerungen ($D_1$, $D_2$, $D_M$) von M rausch-haltigen Sprachsignalen ($x_1$(k), $x_2$(k), $x_m$(k)), die über eine Mikrofongruppe (411) mit M Mikrofonen eingegeben werden, wobei M eine ganze Zahl größer oder gleich 2 ist, kompensiert und dann ein Summensignal (b(k)) der M kompensierten rausch-haltigen Sprachsignalen ($x_1$'(k), $x_2$'(k), $x_m$'(k)) erzeugt, und
einen Mehrkanal-Signalseparator (430), der Rauschkomponenten aus den M kompensierten rausch-haltigen Sprachsignalen ($x_1$'(k), $x_2$'(k), $x_m$'(k)) unter Verwendung von M adaptiven Sperrfiltern (431a, 431b), die mit M adaptiven Löschfiltern (435a, 435b) in einer Rückkoppelstruktur verbunden sind, extrahiert und reine Sprachkomponenten aus dem addierten Signal unter Verwendung der M adaptiven Löschfilter, die mit den M adaptiven Sperrfiltern in der Rückkoppelstruktur verbunden sind, extrahiert,
und **dadurch gekennzeichnet, dass** der Mehrkanal-Signalseparator umfasst:

einen ersten Filter (431), der das rausch-eüminierte Summensignal durch die M adaptiven Sperrfilter (431a, 431b) filtert,
einen ersten Subtrahierer (433), der Signale, die aus den M adaptiven Sperrfiltern ausgegeben werden, von den M kompensierten rausch-haltigen Sprachsignalen ($x_1$'(k), $x_2$'(k), $x_m$'(k)) unter Verwendung von M Subtrahierern (433a, 433b) subtrahiert,
einen zweiten Filter (435), der M Subtraktionsergebnisse ($u_1$(k), $u_2$(k),
$u_m$(k)) des ersten Subtrahierers (433) durch die M adaptiven Löschfilter, (435a, 435b) fiütert,
einen zweiten Subtrahierer (437), der von den M adaptiven Löschfilter (435a, 435b) ausgegebene Signale vom Summensignal (b(k)) unter Verwendung von M Subtrahierern (437a, 437b) subtrahiert und M Subtraktionsergebnisse ($w_1$(k), $w_2$(k), $w_m$(k)) in die M adaptiven Sperrfiltern (431a, 431b) als rausch-eliminiertes Summensignal eingibt, und
einen zweiten Addierer (439), der Signale ($w_1$(k), $w_2$(k), $w_m$(k)), die von den M Subtrahierern des zweiten Subtrahierers (437) ausgegeben werden, addiert.

6.  Vorrichtung zum adaptiven Beamformen, umfassend:

einen festgelegten Beamformer, der Zeitverzögerungen ($D_1$, $D_2$, $D_M$) von M rausch-haltigen Sprachsignalen ($x_1$(k), $x_2$(k), $x_m$(k)), die über eine Mikrofongruppe (411) mit M Mikrofonen eingegeben sind, wobei M eine ganze Zahl größer oder gleich 2 ist, kompensiert und dann ein Summensignal (b(k)) der M kompensierten rausch-haltigen Sprachsignale ($x_1$'(k), $x_2$'(k), $x_m$'(k)) erzeugt, und
einen Mehrkanal-Signaiseparator (430), der Rauschkomponenten aus den M kompensierten rausch-haltigen Sprachsignalen ($x_1$'(k), $x_2$'(k),
$x_m$(k)) unter Verwendung von M adaptiven Sperrfiltern (431a, 431b), die mit M adaptiven Löschfiltern (435a, 435b) in einer Rückkoppelstruktur verbunden sind, extrahiert und reine Sprachkomponenten aus dem addierten Signal unter Verwendung der M adaptiven Löschfilter, die mit den M adaptiven Sperrfiltern in der Rückkoppelstruktur verbunden sind, extrahiert, und
**dadurch gekennzeichnet, dass** der Mehrkanal-Signalseparator umfasst:

einen ersten Filter (531), der das rausch-eliminierte Summensignal durch die M adaptiven Sperrfilter (531a, 531b, 531c) filtert,
einen ersten Subtrahierer (533), der Signale, die aus den M adaptiven Sperrfiltern ausgegeben werden, von den M kompensierten rausch-haltigen Sprachsignalen ($x_1$'(k), $x_2$'(k), $x_m$'(k)) unter Verwendung von M Subtrahierern (533a, 533b, 533c) subtrahiert,
einen zweiten Filter (535), der Signale ($z_1$(k), $z_2$(k), $z_m$(k)), die von den M Subtrahierern (533a, 533b, 533c) des ersten Subtrahierers (53) ausgegeben werden, durch die M adaptiven Löschfilter (535a, 535b, 535c) filtert,
einen zweiten Addierer (537), der Signale, die von den M adaptiven Löschfilter des zweiten Filters ausgegeben werden, addiert, und
einen zweiten Subtrahierer (539), der ein Signal (v(k)), das vom zweiten Addierer (537) ausgegeben wird, von den Signalen (b(k)), die vom festen Beamformer (510) ausgegeben werden, subtrahiert und M Subtraktionsergebnisse in die M adaptiven Sperrfiltern (531a, 531b, 531c) als rausch-eliminiertes Summensignal eingibt.

7.  Vorrichtung nach Anspruch 5 oder 6, wobei der feste Beamformer umfasst:

eine Schätzeinrichtung (413) für Zeitverzögerungen, die Zeitverzögerungen ($D_1$, $D_2$, $D_M$) von Signalen ($x_1$(k), $x_2$(k), $x_m$(k))der M rausch-haltigen Sprachsignale ($x_1$(k), $x_2$(k), $x_m$(k)), die von der Mikrofongruppe (411) eingegeben sind, berechnet,
eine Verzögerungseinrichtung (415), die die M rausch-haltigen Sprachsignale um die von der Verzögerungseinrichtung errechneten Zeitverzögerungen verzögert, und
einen ersten Addierer (417), der die von der Verzögerungseinrichtung (415) verzögerten M rausch-haltigen Sprachsignale addiert.

8.  Vorrichtung nach Anspruch 5, 6 oder 7, wobei die M adaptiven Sperrfilter (531a, 531b, 531c) und die M adaptiven Löschfilter (535a, 535b, 535c) Finite-Impulse-Response(FIR)-Filter sind.

9. Vorrichtung nach Anspruch 5, 6, 7 oder 8, wobei Koeffizienten der M adaptiven Sperrfilter (531a, 531b, 531c) und der M adaptiven Löschfilter (535a, 535b, 535c) durch einen Informationsmaximierungsalgorithmus aktualisiert werden.

**Revendications**

1. Procédé de formation de faisceau adaptative comprenant :

    (a) la compensation de délais temporels ($D_1$, $D_2$, $D_M$) de M signaux vocaux contenant du bruit ($x_1(k)$, $x_2(k)$, $x_m(k)$) entrés par l'intermédiaire d'un réseau de microphones (411) ayant M microphones, où M est un entier supérieur ou égal à 2, et ensuite la génération d'un signal de somme ($b(k)$) des M signaux vocaux contenant du bruit compensés ($x_1'(k)$, $x_2'(k)$, $x_m'(k)$) ; et

    (b) l'extraction de composantes de bruit à partir des M signaux vocaux contenant du bruit compensés ($x_1'(k)$, $x_2'(k)$, $x_m'(k)$) en utilisant M filtres de blocage adaptatifs (431a, 431b) qui sont raccordés à M filtres d'annulation adaptatifs (435a, 435b) dans une structure de rétroaction et l'extraction de composantes vocales pures à partir du signal sommé en utilisant les M filtres d'annulation adaptatifs qui sont raccordés aux M filtres de blocage adaptatifs dans la structure de rétroaction,
    et **caractérisé en ce que** l'étape (b) comprend :

        (b1) le filtrage d'un signal de somme après élimination du bruit à travers les M filtres de blocage adaptatifs (431a, 431b) ;
        (b2) la soustraction des signaux transmis par les M filtres de blocage adaptatifs des M signaux vocaux contenant du bruit compensés ($x_1'(k)$, $x_2'(k)$, $x_m'(k)$) ;
        (b3) le filtrage des M résultats de soustraction ($u_1(k)$, $u_2(k)$, $u_m(k)$) calculés dans l'étape (b2) à travers les M filtres d'annulation adaptatifs (435a, 435b) ;
        (b4) la soustraction des signaux transmis par les M filtres d'annulation adaptatifs (435a, 435b) du signal de somme ($b(k)$) et l'entrée des M résultats de soustraction ($w_1(k)$, $w_2(k)$, $w_m(k)$) dans les M filtres de blocage adaptatifs (431a, 431b) en tant que signal de somme après élimination du bruit ; et
        (b5) la sommation des M résultats de soustraction ($w_1(k)$, $w_2(k)$, $w_m(k)$) calculés dans l'étape (b4).

2. Procédé de formation de faisceau adaptatif comprenant :

    (a) la compensation de délais temporels ($D_1$, $D_2$, $D_M$) de M signaux vocaux contenant du bruit ($x_1(k)$, $x_2(k)$, $x_m(k)$) entrés par l'intermédiaire d'un réseau de microphones (411) ayant M microphones, où M est un entier supérieur ou égal à 2, et ensuite la génération d'un signal de somme ($b(k)$) des M signaux vocaux contenant du bruit compensés ($x_1'(k)$, $x_2'(k)$, $x_m'(k)$) ; et

    (b) l'extraction de composantes de bruit à partir des M signaux vocaux contenant du bruit compensés ($x_1'(k)$, $x_2'(k)$, $x_m'(k)$) en utilisant M filtres de blocage adaptatifs (431a, 431b) qui sont raccordés à M filtres d'annulation adaptatifs (435a, 435b) dans une structure de rétroaction et l'extraction de composantes vocales pures à partir du signal sommé en utilisant les M filtres d'annulation adaptatifs qui sont raccordés aux M filtres de blocage adaptatifs dans la structure de rétroaction,
    et **caractérisé en ce que** l'étape (b) comprend :

        (b1) le filtrage d'un signal de somme après élimination du bruit à travers les M filtres de blocage adaptatifs (531a, 531b, 531c) ;
        (b2) la soustraction des signaux transmis par les M filtres de blocage adaptatifs des M signaux vocaux contenant du bruit compensés ($x_1'(k)$, $x_2'(k)$, $x_m'(k)$) ;
        (b3) le filtrage des M résultats de soustraction ($z_1(k)$, $z_2(k)$, $z_m(k)$) calculés dans l'étape (b2) à travers les M filtres d'annulation adaptatifs (535a, 535b, 535c) ;
        (b4) l'addition des signaux transmis par les M filtres d'annulation adaptatifs ; et
        (b5) la soustraction du signal ($v(k)$) transmis dans l'étape (b4) du signal de somme ($b(k)$) et l'entrée des M résultats de soustraction dans les M filtres de blocage adaptatifs en tant que signal de somme après élimination du bruit.

3. Procédé de la revendication 1 ou 2, dans lequel les M filtres de blocage adaptatifs (431a, 431b) et les M filtres d'annulation adaptatifs (435a, 435b) sont des filtres à réponse impulsionnelle finie.

**4.** Procédé de la revendication 3, dans lequel les coefficients des M filtres de blocage adaptatifs (431a, 431b) et des M filtres d'annulation adaptatifs (435a, 435b) sont mis à jour par un algorithme de maximisation d'information.

**5.** Appareil de formation de faisceau adaptative comprenant :

un formeur de faisceau fixe qui compense les délais temporels ($D_1$, $D_2$, $D_M$) de M signaux vocaux contenant du bruit ($x_1(k)$, $x_2(k)$, $x_m(k)$) entrés par l'intermédiaire d'un réseau de microphones (411) ayant M microphones, où M est un entier supérieur ou égal à 2, et ensuite la génération d'un signal de somme ($b(k)$) des M signaux vocaux contenant du bruit compensés ($x_1'(k)$, $x_2'(k)$, $x_m'(k)$) ; et

un séparateur de signal multicanal (430) qui extrait des composantes de bruit à partir des M signaux vocaux contenant du bruit compensés ($x_1'(k)$, $x_2'(k)$, $x_m'(k)$) en utilisant M filtres de blocage adaptatifs (431a, 431b) qui sont raccordés à M filtres d'annulation adaptatifs (435a, 435b) dans une structure de rétroaction et extrait des composantes vocales pures à partir du signal sommé en utilisant les M filtres d'annulation adaptatifs qui sont raccordés aux M filtres de blocage adaptatifs dans la structure de rétroaction,
et **caractérisé en ce que**
le séparateur de signal multicanal comprend :

un premier filtre (431) qui filtre le signal de somme après élimination du bruit à travers les M filtres de blocage adaptatifs (431a, 431b) ;
un premier soustracteur (433) qui soustrait des signaux transmis par les M filtres de blocage adaptatifs des M signaux vocaux contenant du bruit compensés ($x_1'(k)$, $x_2'(k)$, $x_m'(k)$) en utilisant M soustracteurs (433a, 433b) ;
un deuxième filtre (435) qui filtre les M résultats de soustraction ($u_1(k)$, $u_2(k)$, $u_m(k)$) du premier soustracteur (433) à travers les M filtres d'annulation adaptatifs (435a, 435b) ;
un deuxième soustracteur (437) qui soustrait les signaux transmis par les M filtres d'annulation adaptatifs (435a, 435b) du signal de somme ($b(k)$) en utilisant M soustracteurs (437a, 437b) et entre les M résultats de soustraction ($w_1(k)$, $w_2(k)$, $w_m(k)$) dans les M filtres de blocage adaptatifs (431a, 431b) en tant que signal de somme après élimination du bruit ; et
un deuxième sommateur (439) qui additionne les signaux ($w_1(k)$, $w_2(k)$, $w_m(k)$) transmis par les M soustracteurs du deuxième soustracteur (437),

**6.** Appareil de formation de faisceau adaptative comprenant :

un formeur de faisceau fixe qui compense les délais temporels ($D_1$, $D_2$, $D_M$) de M signaux vocaux contenant du bruit ($x_1(k)$, $x_2(k)$, $x_m(k)$) entrés par l'intermédiaire d'un réseau de microphones (411) ayant M microphones, où M est un entier supérieur ou égal à 2, et ensuite génère un signal de somme ($b(k)$) des M signaux vocaux contenant du bruit compensés ($x_1'(k)$, $x_2'(k)$, $x_m'(k)$) ; et

un séparateur de signal multicanal (430) qui extrait des composantes de bruit à partir des M signaux vocaux contenant du bruit compensés ($x_1'(k)$, $x_2'(k)$, $x_m'(k)$) en utilisant M filtres de blocage adaptatifs (431a, 431b) qui sont raccordés à M filtres d'annulation adaptatifs (435a, 435b) dans une structure de rétroaction et extrait des composantes vocales pures à partir du signal sommé en utilisant les M filtres d'annulation adaptatifs qui sont raccordés aux M filtres de blocage adaptatifs dans la structure de rétroaction,
et **caractérisé en ce que** le séparateur de signal multicanal comprend :

un premier filtre (531) qui filtre le signal de somme après élimination du bruit à travers les M filtres de blocage adaptatifs (531a, 531b, 531c) ;
un premier soustracteur (533) qui soustrait des signaux transmis par les M filtres de blocage adaptatifs des M signaux vocaux contenant du bruit compensés ($x_1'(k)$, $x_2'(k)$, $x_m'(k)$) en utilisant M soustracteurs (533a, 533b, 533c) ;
un deuxième filtre (535) qui filtre les signaux ($z_1(k)$, $z_2(k)$, $z_m(k)$) provenant des M soustracteurs (533a, 533b, 533c) du premier soustracteur (53) à travers les M filtres d'annulation adaptatifs (535a, 535b, 535c) ;
un deuxième sommateur (537) qui somme les signaux transmis par les M filtres d'annulation adaptatifs du deuxième filtre ; et
un deuxième soustracteur (539) qui soustrait le signal ($v(k)$) transmis par le deuxième sommateur (537) des signaux ($b(k)$) transmis par le formeur de faisceau fixe (510) et entre les M résultats de soustraction dans les M filtres de blocage adaptatifs (531a, 531b, 531c) en tant que signal de somme après élimination du bruit.

**7.** Appareil de la revendication 5 ou 6, dans lequel le formeur de faisceau fixe comprend :

un estimateur de délai temporel (413) qui calcule les délais temporels ($D_1$, $D_2$, $D_M$) de signaux ($x_1(k)$, $x_2(k)$, $x_m(k)$) des M signaux vocaux contenant du bruit ($x_1(k)$, $x_2(k)$, $x_m(k)$) entrés par le réseau de microphones (411) ;
un retardateur (415) qui retarde les M signaux vocaux contenant du bruit des délais temporels calculés par le retardateur ; et
un premier sommateur (417) qui somme les M signaux vocaux contenant du bruit retardés par le retardateur (415).

**8.** Appareil de la revendication 5, 6 ou 7, dans lequel les M filtres de blocage adaptatifs (531a, 531b, 531c) et les M filtres d'annulation adaptatifs (535a, 535b, 535c) sont des filtres à réponse impulsionnelle finie.

**9.** Appareil de la revendication 5, 6, 7 ou 8, dans lequel les coefficients des M filtres de blocage adaptatifs (531a, 531b, 531c) et des M filtres d'annulation adaptatifs (535a, 535b, 535c) sont mis à jour par un algorithme de maximisation d'information.

FIG. 1

# FIG. 2

# FIG. 3

FIG. 4

FIG. 5

EP 1 439 526 B1

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Nam-Soo Kim ; Joon-Hyuk Chang.** Spectral Enhancement Based on Global Soft Decision. *IEEE Signal Processing Letters,* 2000, vol. 7 (5), 108-110
- **B. Widrow.** Adaptive Noise Canceling: Principles and Applications. *Proceedings of IEEE,* 1975, vol. 63 (12), 1692-1716
- **O. Hoshuyama.** A Robust Adaptive Beamformer For Microphone Arrays With A Blocking Matrix Using Constrained Adaptive Filters. *IEEE Trans. Signal Processing,* 1999, vol. 47 (10), 2677-2684
- **G. Mirchandani.** A New Adaptive Noise Cancellation Scheme in the Presence of Crosstalk. *IEEE Transactions on Circuits and Systems-II Analog and Digital Signal Processing,* October 1992, vol. 39 (10